# EUROPÄISCHE PATENTSCHRIFT

(11) **EP 2 724 281 B1**
(45) Veröffentlichungstag und Bekanntmachung des Hinweises auf die Patenterteilung: **26.10.2016**
(21) Anmeldenummer: 12743670.7
(22) Anmeldetag: 13.06.2012
(51) Int. Cl.: G06F 21/73, G06F 21/31

(54) **VERFAHREN ZUR DATENKOMMUNIKATION IN EINEM FAHRZEUG UND SYSTEM ZUM BETREIBEN EINES MOBILEN GERÄTS IN EINEM FAHRZEUG**
METHOD FOR COMMUNICATING DATA IN A VEHICLE, AND SYSTEM FOR OPERATING A MOBILE DEVICE IN A VEHICLE
PROCÉDÉ DE COMMUNICATION DE DONNÉES DANS UN VÉHICULE ET SYSTÈME SERVANT À FAIRE FONCTIONNER UN APPAREIL MOBILE DANS UN VÉHICULE

(30) Priorität: 24.06.2011 DE 102011105438
(43) Veröffentlichungstag der Anmeldung: 30.04.2014
(73) Patentinhaber: Volkswagen Aktiengesellschaft, 38436 Wolfsburg (DE)
(72) Erfinder: FESEFELDT, Martin, 30559 Hannover (DE); GÖBEL, Gerrit, 10829 Berlin (DE)
(86) Internationale Anmeldenummer: PCT/EP2012/002488
(87) Internationale Veröffentlichungsnummer: WO 2012/175174

(56) Entgegenhaltungen:
- EP-A1- 0 767 087
- EP-A2- 1 669 903
- WO-A2-97/45780
- DE-A1- 4 446 571
- DE-C1- 3 637 960

## Beschreibung

Die vorliegende Erfindung betrifft ein Verfahren zur Datenkommunikation in einem Fahrzeug zwischen einer fahrzeuginternen Datenkommunikationsvorrichtung und einem mobilen Gerät. Ferner betrifft die Erfindung ein System zum Betreiben eines mobilen Geräts in einem Fahrzeug, wobei das Fahrzeug eine fahrzeuginterne Datenkommunikationsvorrichtung zur Datenkommunikation mit dem mobilen Gerät und einen Speicher aufweist, in dem ein Fahrzeugidentifikationscode unveränderbar gespeichert ist. Ferner umfasst das mobile Gerät eine Sperreinrichtung und einen Speicher, in dem ein Entsperrcode gesichert gespeichert ist.

Mobile Geräte werden bei einem Einsatz in einem Fahrzeug datentechnisch mit einer fahrzeuginternen Einrichtung über ein Kabel oder eine Funkschnittstelle verbunden. Mechanisch kann das mobile Gerät entweder überhaupt nicht mit Einrichtungen des Fahrzeugs verbunden sein oder über eine Halterung. Bei einer Befestigung in einer Halterung ist das mobile Gerät jedoch sehr einfach von der Halterung lösbar, um es beispielsweise von dem Fahrzeug mechanisch entkoppeln zu können, damit es jederzeit vom Nutzer mitgenommen werden kann. Wenn ein mobiles Gerät im Fahrzeug belassen wird, besteht das Risiko, dass das mobile Gerät gestohlen wird. Um dies zu verhindern, ist es bekannt, mobile Geräte über einen persönlichen Identifikationscode gegen Diebstahl zu sichern. Bei der Inbetriebnahme des mobilen Geräts muss der Nutzer den persönlichen Identifikationscode eingeben. Nach der Eingabe dieses Identifikationscodes wird das mobile Gerät entsperrt. Erst danach ist es betriebsbereit.

Bei der Verwendung eines persönlichen Identifikationscodes ergibt sich der Nachteil, dass das Gerät nicht mehr ohne weiteres verwendet werden kann, wenn der Nutzer den persönlichen Identifikationscode vergessen hat. Dieses Problem wird in der WO 2007/094796 A1 dadurch gelöst, dass dem mobilen Gerät ein weiteres Sicherheitsmerkmal zugeordnet ist, welches der gegenwärtigen geographischen Position des elektronischen Geräts entspricht. Der Nutzer kann das mobile Gerät dadurch entsperren, dass er es zu einer bestimmten geographischen Position bringt. Im normalen Betrieb ist es jedoch auch bei diesem Gerät erforderlich, eine persönliche Identifikationsnummer zum Entsperren des Gerätes einzugeben.

Für den Nutzer ist es jedoch lästig, wenn er bei einem mobilen Gerät, das üblicherweise im Fahrzeug verbleibt, jedes Mal beim Einschalten den persönlichen Identifikationscode eingeben muss.

Es ist die Aufgabe der vorliegenden Erfindung, ein Verfahren und ein System der eingangs genannten Art bereitzustellen, bei welchen das Entsperren des mobilen Geräts nutzerfreundlicher gestaltet ist.

Erfindungsgemäß wird diese Aufgabe durch ein Verfahren mit den Merkmalen des Anspruchs 1 und ein System mit den Merkmalen des Anspruchs 5 gelöst. Vorteilhafte Ausgestaltungen und Weiterbildungen ergeben sich aus den abhängigen Ansprüchen.

Bei dem erfindungsgemäßen Verfahren wird das mobile Gerät in einem gesperrten Zustand mit dem Fahrzeug gekoppelt. Diese Kopplung wird beispielsweise dadurch hergestellt, dass das mobile Gerät eingeschaltet wird. Ferner kann die Kopplung dadurch erfolgen, dass eine datentechnische Verbindung des mobilen Geräts mit der fahrzeuginternen Datenkommunikationsvorrichtung hergestellt wird. Dies kann z. B. beim Betätigen des Zündschlüssels des Fahrzeugs geschehen. Daraufhin wird mittels der fahrzeuginternen Datenkommunikatiönsvorrichtung ein in einem Speicher des Fahrzeugs unveränderbar gespeicherter Fahrzeugidentifikationscode an das mobile Gerät übertragen. In dem mobilen Gerät wird dann der übertragene Fahrzeugidentifikationscode mit einem in dem mobilen Gerät gesichert gespeicherten Entsperrcode verglichen. Falls die verglichenen Codes übereinstimmen, wird das mobile Gerät entsperrt.

Bei dem erfindungsgemäßen Verfahren ist es somit beim Einschalten des mobilen Geräts oder bei der Kopplung des mobilen Geräts mit einer fahrzeuginternen Einrichtung nicht erforderlich, einen persönlichen Identifikationscode einzugeben. Dennoch ist das mobile Gerät gegen Diebstahl geschützt, da das mobile Gerät nicht entsperrt werden kann, wenn es mit einem Fahrzeug gekoppelt wird, in dem ein anderer Fahrzeugidentifikationscode gespeichert ist. Der in dem mobilen Gerät gespeicherte Entsperrcode kann dabei auch nicht so verändert werden, dass er einem anderen Fahrzeugidentifikationscode entspricht. Der Entsperrcode ist nämlich gesichert in dem mobilen Gerät gespeichert. Die Sicherung kann beispielsweise durch einen persönlichen Identifikationscode erfolgen. Der Entsperrcode kann in diesem Fall nur verändert werden, nachdem ein persönlicher Identifikationscode eingegeben worden ist. Dieser persönliche Identifikationscode ist in diesem Fall jedoch nur ein sekundäres Sicherungsmittel, da er nicht jedes Mal eingegeben werden muss, wenn das mobile Gerät in Betrieb genommen wird.

Bei dem Fahrzeugidentifikationscode handelt es sich insbesondere um die sogenannte Fahrzeug-Identifizierungsnummer (Vehicle Identification Number, VIN). Diese Fahrzeug-Identifizierungsnummer ist eine international genormte, 17-stellige Nummer, mit welcher ein Kraftfahrzeug eindeutig identifizierbar ist. Sie ist datentechnisch so in einem Speicher des Fahrzeugs gespeichert, dass sie zwar ausgelesen werden kann, sie jedoch nicht verändert werden kann.

Unter einer fahrzeuginternen Einrichtung, wie der Datenkommunikationsvorrichtung, wird im Sinne der Erfindung eine Einrichtung verstanden, die im Fahrzeug fest verbaut ist. Sie kann beispielsweise nur mittels eines Werkzeugs ausgebaut werden. Zu den fahrzeugintemen Einrichtungen gehören beispielsweise die vielfältigen Einrichtungen der Fahrzeugelektronik, insbesondere Informations- sowie Infotainmentsysteme und Fahrerassistenzsysteme, wie zum Beispiel eine elektronische Einparkhilfe.

Unter einem mobilen Gerät wird im Sinne der Erfindung ein Gerät verstanden, welches nicht fest im Fahrzeug verbaut ist, sondern typischerweise vom Nutzer manuell vom Fahrzeug gelöst und mechanisch mit dem Fahrzeug verbunden werden kann. Eine körperliche Verbindung mit dem Fahrzeug ist jedoch nicht unbedingt erforderlich. Es reicht bei mobilen Geräten vielfach auch aus, dass sich das Gerät innerhalb des Fahrzeugs befindet und nur datentechnisch mit dem Fahrzeug gekoppelt wird. Bei einem solchen mobilen Gerät handelt es sich insbesondere um ein mobiles Navigationssystem, ein Mobiltelefon oder einen sogenannten PDA (Personal Digital Assistant).

Gemäß einer Weiterbildung des erfindungsgemäßen Verfahrens wird eine Aufforderung zur Eingabe eines persönlichen Identifikationscodes ausgegeben, falls die verglichenen Codes nicht übereinstimmen. Der persönliche Identifikationscode erfüllt in diesem Fall somit die Funktion eines sekundären Entsperrmittels. Sollte die Entsperrung durch die Übertragung des Fahrzeug-Identifikationscodes und der Vergleich mit dem in dem mobilen Gerät gespeicherten Entsperrcode nicht funktionieren, kann das mobile Gerät immer noch durch Eingabe des persönlichen Identifikationscodes in Betrieb genommen werden. Auf diese Weise ist es vorteilhafterweise möglich, dass der Nutzer sein mobiles Gerät auch außerhalb des Fahrzeugs oder in anderen Fahrzeugen benutzen kann. In diesem Fall ist allerdings die Eingabe des persönlichen Identifikationscodes für die Inbetriebnahme des mobilen Geräts erforderlich.

Bei der Kopplung mobiler Geräte mit Einrichtungen des Fahrzeugs ist es erforderlich, kompatible Datenprotokolle zu verwenden, die es ermöglichen, dass die fahrzeuginterne Einrichtung die von dem mobilen Gerät empfangenen Daten weiterverarbeiten kann und umgekehrt das mobile Gerät Daten der fahrzeuginternen Einrichtungen weiterverarbeiten kann.

Bei der Kopplung eines mobilen Navigationsgeräts mit dem Fahrzeug ist es beispielsweise bekannt, das mobile Navigationssystem über die Schnittstelle für ein Fahrzeugdiagnosesystem (die sogenannte OBD-II-Buchse) mit fahrzeuginternen Einrichtungen zu koppeln. Über diese Schnittstelle werden dem mobilen Navigationsgerät fahrzeugspezifische Informationen zugeführt, insbesondere umweltrelevante Informationen. Diese Informationen können für eine kraftstoffoptimierte Navigationsfunktion des mobilen Navigationsgeräts genutzt werden. ,

Bei dem erfindungsgemäßen Verfahren ist es möglich, das mobile Gerät auf andere Weise mit der fahrzeuginternen Einrichtung zu koppeln. Beispielsweise kann die fahrzeuginterne Einrichtung Daten über einen Datenbus des Fahrzeugs an eine fahrzeuginterne Datenkommunikationsvorrichtung übertragen, wobei ein erstes Datenprotokoll verwendet wird. Bei diesem ersten Datenprotokoll erfolgt insbesondere eine Arbitrierung. Die Datenkommunikationsvorrichtung konvertiert dann die Daten und überträgt die konvertierten Daten über eine Datenverbindung an das mobile Gerät. Bei der Datenübertragung von der fahrzeuginternen Datenkommunikationsvorrichtung an das mobile Gerät wird insbesondere ein zweites Datenprotokoll verwendet, bei dem keine Arbitrierung erfolgt.

Unter einer Arbitrierung wird bei der Datenkommunikation verstanden, dass Zugriffskonflikte oder Zugriffskollisionen auf Daten gelöst werden. Beispielsweise können die Daten priorisiert werden, sodass die Reihenfolge der Verarbeitung der übertragenen Daten festgelegt wird. Bei dem erfindungsgemäßen Verfahren werden Datenprotokolle mit Arbitrierung und ohne Arbitrierung verwendet. Dabei wird die fahrzeuginterne Datenkommunikation zwischen der fahrzeuginternen Einrichtung und der fahrzeuginternen Datenkommunikationsvorrichtung über den Datenbus des Fahrzeugs arbitriert, sodass herkömmliche Bussysteme in Fahrzeugen eingesetzt werden können. Bei der Datenübertragung zu dem mobilen Gerät wird hingegen ein anderes Datenprotokoll verwendet, bei dem keine Arbitrierung erfolgt. Auf diese Weise kann die Datenkommunikation mit dem mobilen Gerät vereinfacht und an Schnittstellen angepasst werden, wie sie außerhalb des Einsatzes in Fahrzeugen üblich sind. Beispielsweise können Schnittstellen verwendet werden, die in der Unterhaltungselektronik oder Mobilfunktechnik eingesetzt werden. Es wird somit vorteilhafterweise ein Verfahren bereitgestellt, bei dem unterschiedliche, bereits existierende und gegebenenfalls standardisierte Kommunikationsprotokolle verwendet und miteinander verknüpft werden. Hierdurch wird die Verwendung von externen Geräten aus der Unterhaltungselektronik und von Zusatzgeräten für Fahrzeuge erleichtert. Dabei wird insbesondere ein Datenaustausch des externen mobilen Geräts, welches mit dem Fahrzeug datentechnisch gekoppelt ist, mit fahrzeuginternen Einrichtungen ermöglicht.

Gemäß einer bevorzugten Ausgestaltung des erfindungsgemäßen Verfahrens setzt die Datenkommunikationsvorrichtung für die Datenübertragung mittels des zweiten Datenprotokolls die über den Datenbus des Fahrzeugs empfangenen Daten in ein Datenformat für eine asynchrone serielle Schnittstelle um. Eine solche Schnittstelle ist außerhalb des Fahrzeugs bei elektronischen Einrichtungen sehr gebräuchlich, sodass durch die Konversion der Daten für diese Schnittstelle die Anbindung von elektronischen Einrichtungen erleichtert wird, welche keine speziellen Anpassungen an die Fahrzeugelektronik aufweisen.

Gemäß einer Weiterbildung des erfindungsgemäßen Verfahrens filtert die Datenkommunikationsvorrichtung die über den Fahrzeugbus empfangenen Daten vor der Übertragung der konvertierten Daten an das mobile Gerät. Über den Datenbus des Fahrzeugs werden üblicherweise eine Vielzahl von Daten übertragen, die für das mobile Gerät nicht relevant sind. Es ist daher nicht erforderlich, dass das mobile Gerät auf diese Daten zugreifen kann. Durch die Filterung wird somit die Datenmenge, welche an das mobile Gerät übertragen wird, erheblich reduziert. Andererseits können jedoch die für das mobile Gerät insgesamt oder temporär relevanten Daten extrahiert und an das mobile Gerät konvertiert übertragen werden. Außerdem wird hierdurch eine Firewall-Funktion bereitgestellt.

Bei der Datenverbindung zwischen der Datenkommunikationsvorrichtung und dem mobilen Gerät handelt es sich insbesondere um eine serielle Punkt-zu-Punkt-Verbindung. Bei einer solchen Punkt-zu-Punkt-Verbindung ist vorteilhafterweise eine Arbitrierung nicht erforderlich. Die für das mobile Gerät relevanten Daten werden direkt von der Datenkommunikationsvorrichtung an dasselbe übertragen. Umgekehrt kann das mobile Gerät Daten direkt an die Datenkommunikationsvorrichtung übertragen, damit sie von fahrzeuginternen Einrichtungen weiterverarbeitet werden können.

Die Datenverbindung zwischen dem mobilen Gerät und der Datenkommunikationsvorrichtung kann beispielsweise eine herkömmliche Drahtverbindung sein. Es kann jedoch auch eine kurzreichweitige Funkverbindung hergestellt werden, beispielsweise eine Bluetooth- oder WLAN-Verbindung. Auf diese Weise erreicht man, dass gängige Schnittstellen von mobilen Geräten für die Kommunikation mit Einrichtungen des Fahrzeugs genutzt werden können.

Gemäß einer Ausgestaltung des erfindungsgemäßen Verfahrens werden die Daten bei dem zweiten Datenprotokoll paketweise übertragen, wobei die Länge eines Datenpakets größer als 8 Byte und kleiner als 255 Byte ist. Bei dem zweiten Datenprotokoll ist man somit vorteilhafterweise nicht auf Datenpakete von 8 Byte beschränkt, wie sie beispielsweise bei der Datenübertragung über Datenbusse des Fahrzeugs zum Einsatz kommen. Auf diese Weise kann man die Datenübertragung zwischen der fahrzeuginternen Datenkommunikationsvorrichtung und dem mobilen Gerät flexibler ausgestalten.

Des Weiteren ist es möglich, die Datenübertragung zwischen der Datenkommunikationsvorrichtung und dem mobilen Gerät zu verschlüsseln. Hierdurch wird die Sicherheit der Datenübertragung gewährleistet und verhindert, dass die Datenkommunikation von unberechtigten Dritten mitgelesen wird. Altemativ kann auch durch die Protokollfestlegung ein freier Zugriff oder ein Mittesen verhindert werden.

Die Datenübertragung zwischen der fahrzeuginternen Datenkommunikationsvorrichtung und dem mobilen Gerät erfolgt insbesondere bidirektional. Auf diese Weise kann beispielsweise eine Audioquellensteuerung ermöglicht werden. Beispielsweise können Audiodaten des mobilen Geräts über die im Fahrzeug verbauten Lautsprecher umgesetzt werden, wobei von den fahrzeuginternen Einrichtungen ein Audio-Prioritätsmanagement und/oder eine Visualisierung des Zustands der Audioausgabe vorgenommen werden kann: Umgekehrt ist es auch möglich, die Audioausgabe des mobilen Geräts zu nutzen, um die Daten von Audioquellen von fahrzeuginternen Einrichtungen auszugeben. Die Steuerung der Audioausgabe kann dabei von einer fahrzeuginternen Einrichtung und/oder mittels des mobilen Gerätes erfolgen.

Bei der Datenübertragung zwischen der fahrzeuginternen Datenkommunikationsvorrichtung und dem mobilen Gerät können ferner Spezifikationsinformationen des mobilen Geräts an die fahrzeuginterne Datenkommunikationsvorrichtung übertragen werden und/oder Spezifikationsinformationen der Datenkommunikationsvorrichtung an das mobile Gerät übertragen werden. Auf diese Weise kann die Kompatibilität der jeweiligen Hardware und Software zueinander geprüft werden. Außerdem können Anpassungen an die verwendete Hardware bzw. Software vorgenommen werden und somit Fehler von Anwendungen vermieden werden, welche sowohl fahrzeuginterne Einrichtungen als auch das mobile Gerät verwenden.

Bei dem Datenbus des Fahrzeugs handelt es sich insbesondere um den CAN (Controller Area Network)-Bus des Fahrzeugs. Es wird somit ein übliches standardisiertes Datenprotokoll für die Kommunikation zwischen den fahrzeuginternen Einrichtungen und der fahrzeuginternen Datenkommunikationsvorrichtung verwendet. Gemäß einer Weiterbildung des erfindungsgemäßen Verfahrens setzt die Datenkommunikationsvorrichtung die über den CAN-Bus empfangenen Daten in ein Zwischendatenformat um. Nach der Datenübertragung an das mobile Gerät setzt dieses die von der Datenkommunikationsvorrichtung empfangenen Daten in ein Datenformat für die asynchrone serielle Schnittstelle um. Die Datenkonversion über das Zwischendatenformat erfordert zwar eine weitere Datenumsetzung in dem mobilen Gerät. Es ergeben sich jedoch die folgenden Vorteile: Bei der Datenumsetzung in der fahrzeuginternen Datenkommunikationsvorrichtung bleibt eine Datenstruktur erhalten, welche bestehende Entwicklungswerkzeuge zur Simulation und Fehlersuche bei der Datenübertragung ermöglicht. Diese Entwicktungswerkzeuge werden bei der Analyse der Datenübertragung mittels des CAN-Buses bereits eingesetzt. Sie sind auch bei dem erfindungsgemäßen Verfahren für die Überprüfung der Datenkommunikation mit dem mobilen Gerät einsetzbar. Die Datenstrukturen, die hierfür jedoch nicht erforderlich sind, wie insbesondere die Arbitrierung, müssen jedoch bei der Datenübertragung an das mobile Gerät nicht verwendet werden, sodass der Aufwand für die Datenumsetzung in dem mobilen Gerät verringert wird. Es sind somit keine speziellen Entwicklungswerkzeuge für die Analyse der Datenkommunikation mit dem mobilen Gerät erforderlich.

Das erfindungsgemäße System zum Betreiben eines mobilen Geräts in einem Fahrzeug ist dadurch gekennzeichnet, dass mittels der fahrzeuginternen Datenkommunikationsvorrichtung der in dem Speicher des Fahrzeugs gespeicherte Fahrzeugidentifikationscode an das mobile Gerät übertragbar ist und in der Sperreinrichtung des mobilen Geräts der übertragene Fahrzeugidentifikationscode mit dem in der Entsperreinrichtung gespeicherten Entsperrcode vergleichbar ist. Falls die verglichenen Codes übereinstimmen, ist das mobile Gerät entsperrbar.

Das erfindungsgemäße System kann insbesondere das vorstehend beschriebene erfindungsgemäße Verfahren durchführen. Es weist somit dieselben Vorteile wie das erfindungsgemäße Verfahren auf.

Gemäß einer Weiterbildung der Erfindung kann die Datenkommunikationsvorrichtung die Datenkommunikation zwischen einer weiteren fahrzeuginternen Einrichtung und dem mobilen Gerät durchführen, nachdem das mobile Gerät entsperrt ist. Die Datenkommunikationsvorrichtung umfasst hierfür z.B. eine erste Schnittstelle zum Empfang von Daten von der fahrzeuginternen Einrichtung über einen Datenbus des Fahrzeugs, wobei ein erstes Datenprotokoll verwendet wird, bei dem eine Arbitrierung erfolgt. Femer weist sie einen Konverter zum Konvertieren der empfangenen Daten und eine zweite Schnittstelle zum Übertragen der konvertierten Daten über eine Datenverbindung an das mobile Gerät auf. Mittels des Konverters sind die Daten für die Datenübertragung an das mobile Gerät in ein zweites Datenprotokoll konvertierbar, bei dem keine Arbitrierung erfolgt.

Bei dem mobilen Gerät kann es sich insbesondere um eine mobile Navigationsvorrichtung handeln. Die fahrzeuginternen Datenkommunikationsvorrichtung ist beispielsweise in ein Rundfunkgerät integriert. Ein solches Rundfunkgerät ist üblicherweise in den meisten Kraftfahrzeugen vorgesehen. Es übernimmt bei dem erfindungsgemäßen System die Funktion einer zentralen Schnittstelle im Fahrzeug, welche die Datenkommunikation mit mobilen Geräten bereitstellt. Die Datenkommunikationsvorrichtung kann ferner ein CD-Laufwerk oder andere Multimedia- oder Infotainmenteinrichtungen umfassen.

Durch die Datenkommunikationsvorrichtung wird somit eine Schnittstelle zwischen dem Rundfunkgerät des Fahrzeugherstellers und beispielsweise einem mobilen Navigationsgerät für Endverbraucher bereitgestellt, welches nicht fest in dem Fahrzeug verbaut ist. Auf diese Weise kann ein voll funktionales Radio-Navigationssystem bereitgestellt werden, welches kostengünstig ist und bei dem das mobile Navigationsgerät einfach und kostengünstig erneuert und an Weiterentwicklungen in diesem Bereich angepasst werden kann. Auf diese Weise lassen sich Entwicklungszyklen von Radio-Navigationssystemen verkürzen.

Die Erfindung wird nun anhand von Ausführungsbeispielen mit Bezug zu den Zeichnungen erläutert.
- Figur 1: zeigt schematisch ein Kraftfahrzeug mit einem Ausführungsbeispiel des erfindungsgemäßen Datenkommunikationssystems,
- Figur 2: zeigt ein Ausführungsbeispiel der Datenkommunikationsvorrichtung und deren Kopplung mit dem Fahrzeugbus und dem mobilen Gerät und
- Figuren 3 und 4: zeigen schematisch ein Ausführungsbeispiel des erfindungsgemäßen Verfahrens.

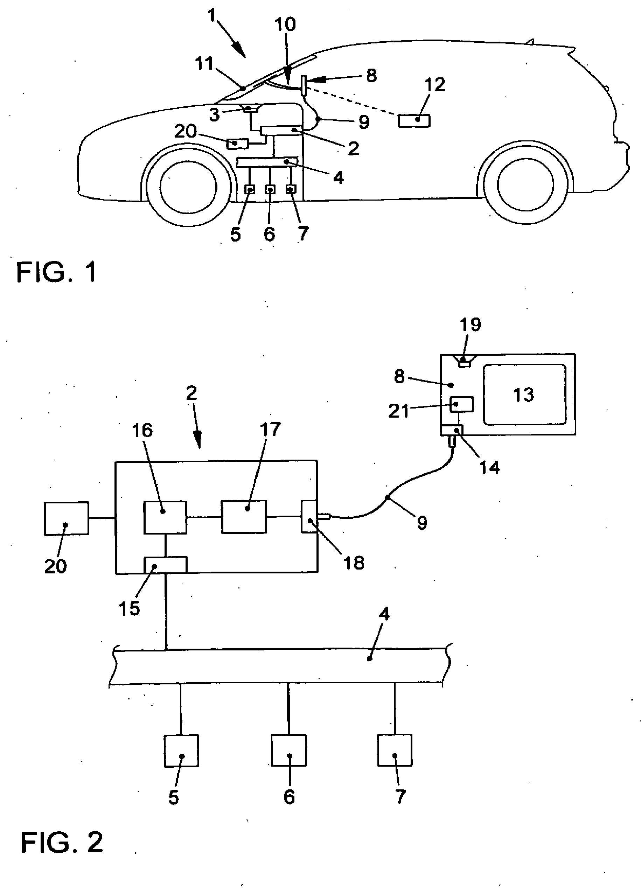

Mit Bezug zu den Figuren 1 und 2 wird ein Ausführungsbeispiel des erfindungsgemäßen Systems zum Betreiben eines mobilen Geräts 8 in einem Fahrzeug 1 beschrieben:

Das System umfasst eine Datenkommunikationsvorrichtung 2, die fest in das Fahrzeug 1 eingebaut ist. Sie ist insbesondere in ein fest eingebautes Rundfunkgerät integriert. Die Datenkommunikationsvorrichtung 2 ist somit insbesondere für die Datenkommunikation mit anderen fahrzeugintemen Einrichtungen ausgebildet. Hierfür ist sie über die Schnittstelle 15 mit dem CAN-Bus 4 des Fahrzeugs gekoppelt, welcher wiederum mit weiteren fahrzeuginternen Einrichtungen 5, 6 und 7 verbunden ist. Diese weiteren fahrzeuginternen Einrichtungen 5, 6 und 7 können zum Beispiel Sensoren umfassen, welche Betriebsdaten des Fahrzeugs, wie zum Beispiel die aktuelle Geschwindigkeit, den aktuellen Kraftstoffverbrauch und ähnliche Daten aufnehmen. Des Weiteren kann es sich bei den fahrzeugintemen Einrichtungen 5, 6 und 7 um Fahrerassistenzsysteme wie zum Beispiel eine Einparkhilfe handeln. Schließlich kann es sich bei den fahrzeugintemen Einrichtungen 5, 6 und 7 um Multimedia- oder Infotainmenteinrichtungen handeln, welche zusätzlich zu dem Rundfunkgerät, welches die Datenkommunikationsvorrichtung 2 enthält, vorgesehen sind. Die Multimedia- oder Infotainmenteinrichtungen können aber auch in dem Rundfunkgerät enthalten sein. Des Weiteren ist die Datenkommunikationsvorrichtung 2 mit einem Lautsprecher 3 zur Ausgabe von Audiodaten gekoppelt.

Die Datenkommunikationsvorrichtung 2 ist des Weiteren mit einem Speicher 20 des Fahrzeugs 1 verbunden. Bei dem Speicher 20 handelt es sich insbesondere um einen Festwertspeicher (ROM). In diesem Speicher 20 ist als Fahrzeugidentifikationscode unveränderbar die Fahrzeug-Identifizierungsnummer gespeichert. Diesen Fahrzeugidentifikationscode kann die Datenkommunikationsvorrichtung 2 aus dem Speicher 20 auslesen. Eine Veränderung dieses Codes ist jedoch nicht möglich.

In dem Fahrzeug 1 ist des Weiteren ein mobiles Gerät 8 angeordnet. Es handelt sich hierbei insbesondere um ein mobiles Navigationsgerät. Das mobile Gerät 8 ist über eine an sich bekannte Befestigungsvorrichtung 10 an der Windschutzscheibe 11 des Fahrzeugs 1 oder an der Armaturentafel befestigt. Für die datentechnische Kopplung des mobilen Geräts 8 mit der Datenkommunikationsvorrichtung 2 des Fahrzeugs 1 weist das mobile Gerät 8 eine Schnittstelle 14 auf. Es handelt sich hierbei um eine asynchrone serielle Schnittstelle. Über diese Schnittstelle 14 kann das mobile Gerät 8 mit der Schnittstelle 18 der Datenkommunikationsvorrichtung 2 zum Beispiel über ein Kabel 9 verbunden werden. Alternativ oder zusätzlich können die Schnittstellen 14 oder 18 auch über eine Funkverbindung, wie zum Beispiel eine sogenannte Bluetooth- oder WLAN-Verbindung miteinander kommunizieren. Das mobile Gerät 8 kann ferner eine Anzeigefläche 13 und einen Lautsprecher 19 umfassen.

Für die Datenübertragung von dem CAN-Bus 4 an das mobile Gerät 8 weist die Datenkommunikationsvorrichtung 2 eine Filtereinrichtung 16 zum Filtern der vom CAN-Bus 4 empfangenen Daten und einen Konverter 17 zum Konvertieren der empfangenen Daten für die Übertragung an das mobile Gerät 8 auf. Die Funktion der Filtereinrichtung 16 und des Konverters 17 wird später mit Bezug zu dem Ausführungsbeispiel des erfindungsgemäßen Verfahrens erläutert.

Schließlich kann das mobile Gerät 8 datentechnisch mit einem weiteren mobilen Gerät 12 zum Beispiel über eine Funkverbindung gekoppelt sein. Bei dem weiteren mobilen Gerät 12 kann es sich um ein Mobiltelefon oder ein Musikabspielgerät handeln.

Das mobile Gerät 8 umfasst des Weiteren eine Sperreinrichtung 21. In dieser Sperreinrichtung 21 ist ein Entsperrcode gesichert gespeichert. Des Weiteren ist in der Sperreinrichtung 21 ein persönlicher Identifikationscode gespeichert. Bei der ersten Inbetriebnahme des mobilen Geräts 8 wird der Nutzer aufgefordert, einen persönlichen Identifikationscode als sekundären Sicherheitsschlüssel einzugeben. Nach der Eingabe des persönlichen Identifikationscodes wird dieser in der Sperreinrichtung 21 so gespeichert, dass er vom Nutzer nicht mehr geändert werden kann. Eine geänderte Eingabe des persönlichen Identifikationscodes ist allenfalls nach einem Zurücksetzen des mobilen Geräts 8 durch den Hersteller möglich.

Als Entsperrcode kann nach der Eingabe des persönlichen Identifikationscodes der Fahrzeugidentifikationscode des Fahrzeugs 1, mit welchem das mobile Gerät 8 überwiegend genutzt werden soll, vom Nutzer eingegeben werden. Da dieser Fahrzeugidentifikationscode dem Nutzer jedoch häufig nicht bekannt ist, ist es auch möglich, dass bei der ersten Benutzung des mobilen Geräts 8 in einem Fahrzeug 1 der Nutzer aufgefordert wird, seinen persönlichen Identifikationscode einzugeben. Danach wird der Fahrzeugidentifikationscode von der Datenkommunikationsvorrichtung 2 des Fahrzeugs 1 an das mobile Gerät 8 übertragen, welches diesen Fahrzeugidentifikationscode bei der ersten Verwendung des mobilen Geräts 8 in der Sperreinrichtung 21 als Entsperrcode gesichert speichert. Dieser Entsperrcode wird bei der nächsten Kopplung des mobilen Geräts 8 mit einem Fahrzeug 1 nicht mehr verändert. Eine Veränderung ist nur durch den Nutzer möglich, nachdem dieser seinen persönlichen Identifikationscode eingegeben hat. Der Entsperrcode dient dem Entsperren des mobilen. Geräts 8, wenn es sich in einem gesperrten Zustand befindet.

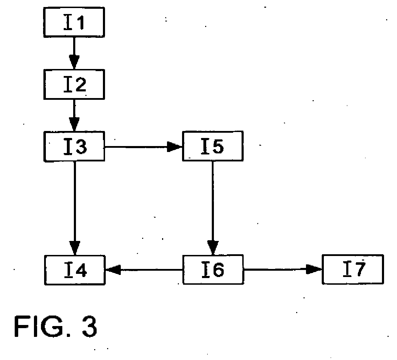

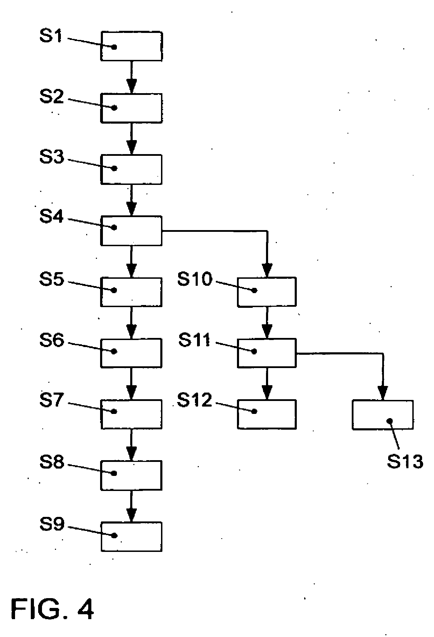

Mit Bezug zur Figur 3 und Figur 4 wird im Folgenden ein Ausführungsbeispiel des erfindungsgemäßen Verfahrens erläutert:

Der Nutzer kann das mobile Gerät 8 manuell ohne weiteres vom Fahrzeug 1 lösen und mit sich tragen. Mittels der Befestigungsvorrichtung 10 kann er es wieder körperlich im Fahrzeug befestigen. Über die Schnittstelle 14, gegebenenfalls unter Zuhilfenahme des Kabels 9 oder durch eine Funkverbindung, kann er es datentechnisch mit der Datenkommunikationsvorrichtung 2 des Fahrzeugs 1 koppeln.

Wenn das mobile Gerät 8 ausgeschaltet ist oder nachdem die Datenverbindung mit dem Fahrzeug 1 gelöst wurde, wird das mobile Gerät 8 in einen gesperrten Zustand versetzt. In einem solchen gesperrten Zustand kann das mobile Gerät 8 z.B. entsperrt werden, nachdem der persönliche Identifikationscode vom Nutzer in das mobile Gerät 8 eingegeben wurde. Hierfür kann die Anzeigefläche 13 beispielsweise als berührungsempfindliche Anzeigefläche ausgebildet sein. Das mobile Gerät 8 kann jedoch auch auf andere Weise entsperrt werden, wenn es mit dem Fahrzeug 1 gekoppelt wird, dessen Fahrzeugidentifikationscode als Entsperrcode in der Sperreinrichtung 21 des mobilen Geräts 8 gespeichert ist. Die Kopplung des mobilen Geräts 8 mit einem solchen Fahrzeug 1 wird im Folgenden mit Bezug zu Figur 3 erläutert:

Es wird im Folgenden davon ausgegangen, dass sich das mobile Gerät 8 zunächst in einem gesperrten Zustand befindet. Es kann beispielsweise ausgeschaltet sein. Wird das mobile Gerät 8 nun im Schritt I1 eingeschaltet, prüft die Schnittstelle 14 zunächst, ob eine Datenverbindung zu der Datenkommunikationsvorrichtung 2 besteht. Wenn eine solche Datenverbindung besteht, liest im Schritt I2 die Datenkommunikationsvorrichtung 2 den Fahrzeugidentifikationscode aus dem Speicher 20 aus und überträgt ihn über die Schnittstellen 18 und 14 an die Sperreinrichtung 21 des mobilen Geräts 8.

Im Schritt I3 wird in der Sperreinrichtung 21 des mobilen Geräts 8 der übertragene Fahrzeugidentifikationscode mit dem in der Sperreinrichtung 21 des mobilen Geräts 8 gespeicherten Entsperrcode verglichen. Wenn diese beiden Codes übereinstimmen, wird das mobile Gerät im Schritt I4 entsperrt. Wenn diese beiden Codes nicht übereinstimmen, wird der Nutzer im Schritt I5 zur Eingabe des persönlichen Identifikationscodes aufgefordert. Wenn der Nutzer im Schritt I6 den richtigen persönlichen Identifikationscode eingegeben hat, wird das mobile Gerät 8 im Schritt I4 entsperrt. Wenn der Nutzer keinen korrekten persönlichen Identifikationscode eingibt, verbleibt das mobile Gerät 8 im Schritt I7 im gesperrten Zustand.

Im Folgenden wird mit Bezug zu Figur 4 die Datenkommunikation zwischen den fahrzeuginternen Einrichtungen 5, 6, 7 über die Datenkommunikätionsvorrichtung 2 mit dem mobilen Gerät 8 beschrieben:

Im Schritt S1 wird das mobile Gerät 8 mit der Datenkommunikationsvorrichtung 2 datentechnisch gekoppelt und, wie mit Bezug zu Figur 3 beschrieben, entsperrt.

Daraufhin werden im Schritt S2 Authentifikationsdaten zwischen der Datenkommunikationsvorrichtung 2 und dem mobilen Gerät 8 ausgetauscht. Aufgrund dieser Authentifikationsdaten kann das mobile Gerät 8 sicherstellen, dass die über die Schnittstelle 14 empfangenen Daten von fahrzeuginternen Einrichtungen des Fahrzeugs 1 stammen. Umgekehrt kann die Datenkommunikationsvorrichtung 2 das mobile Gerät 8 anhand der Authentifikationsdaten identifizieren.

Im Schritt S3 werden dann Spezifikationsdaten zu den Hardware- und Softwareversionen des mobilen Geräts 8 und der Datenkommunikationsvorrichtung 2 sowie gegebenenfalls weiteren fahrzeuginternen Einrichtungen 5, 6, 7 ausgetauscht. Hierdurch kann die Kompatibilität von Anwendungen, welche die Datenkommunikationsvorrichtung 2 verwenden, sichergestellt werden.

Im Schritt S4 werden die Authentifikationsdaten und die Spezifikationsdaten geprüft. Bei erfolgreicher Prüfung wird die Datenkommunikation über die Schnittstellen 14 und 18 zwischen der Datenkommunikationsvorrichtung 2 und dem mobilen Gerät 8 freigeschaltet.

Im Schritt S5 prüft die Datenkommunikationsvorrichtung 2 nun mittels der Schnittstelle 15, ob über den CAN-Bus 4 Daten verfügbar sind, welche an das mobile Gerät 8 übertragen werden sollen. Für die Datenübertragung mittels des CAN-Buses 4 wird ein erstes an sich bekanntes Datenprotokoll verwendet. Bei diesem Datenprotokoll werden die zu übertragenden Daten in Datenpakete mit einer Länge von 8 Byte eingeteilt. Ferner wird eine Arbitrierung vorgenommen. Die Adressierung für Daten, die über den CAN-Bus 4 übertragen werden, erfolgt nämlich derart, dass es verschiedene Sender geben kann, die Datenpakete übertragen, die von verschiedenen Empfängern empfangen werden können. Es handelt sich somit um eine Art Broadcast-Übertragung. Wenn verschiedene Sender über den CAN-Bus Daten übertragen, ist es erforderlich, eine Reihenfolge festzulegen, in welcher ein potentieller Empfänger die Daten ausliest. Es wird somit eine Priorisierung vorgenommen.

Wenn sich ergeben hat, dass relevante Daten für das mobile Gerät 8 vorliegen, werden die Datenpakete, welche von dem CAN-Bus 4 über die Schnittstellen 15 empfangen worden sind, in der Filtereinrichtung 16 so gefiltert, dass nur noch für das mobile Gerät 8 relevante Daten vorliegen. Diese Filterung erfolgt im Schritt S6. Im Schritt S7 werden die gefilterten Datenpakete dann mittels des Konverters 17 für die Übertragung an das mobile Gerät konvertiert. Bei der Konversion wird die Limitierung der Datenpakete auf 8 Byte aufgehoben. Die Datenpakete, welche für die Übertragung an das mobile Gerät 8 erzeugt werden, können größer als 8 Byte sein. Üblicherweise werden sie jedoch kleiner als 255 Byte sein.

Bei der Datenverbindung zwischen der Datenkommunikationsvorrichtung 2 und dem mobilen Gerät 8 handelt es sich um eine Punkt-zu-Punkt-Verbindung. Die Datenübertragung erfolgt daher nicht mit dem Broadcast-Verfahren. Es wird somit keine Arbitrierung bei der Datenübertragung verwendet. Der Konverter 17 setzt somit die von dem CAN-Bus 4 empfangenen Daten in ein zweites Datenprotokoll um, welches keine Arbitrierung verwendet, welches nicht auf eine Größe von 8 Byte der Datenpakete begrenzt ist und welches ein Datenformat für die asynchrone serielle Schnittstelle 14 des mobilen Geräts 8 bereitstellt.

Im Schritt S8 erfolgt die Datenübertragung mittels dieses zweiten Datenprotokolls über die Schnittstellen 18 und 14 an das mobile Gerät 8. In Schritt S9 verarbeitet das mobile Gerät 8 dann die empfangenen Daten weiter und erzeugt gegebenenfalls akustische und visuelle Ausgaben.

Nachdem die Verbindung des mobilen Geräts 8 mit der Datenkommunikationsvorrichtung 2 im Schritt S4 freigeschaltet worden ist, können im Schritt S10 auch Daten von dem mobilen Gerät 8 über die Schnittstelle 14 und die Schnittstelle 18 an die Datenkommunikationsvorrichtung 2 übertragen werden. Auch diese Datenübertragung erfolgt mittels des zweiten Datenprotokolls. Im Konverter 17 werden im Schritt S11 dann die Daten des zweiten Datenprotokolls in das Datenformat des ersten Datenprotokolls, welches dem Datenformat des CAN-Buses 4 entspricht, umgesetzt. Dabei werden die Datenpakete so verändert, dass sie allenfalls 8 Byte umfassen. Ferner wird eine Arbitrierung vorgenommen: Im Schritt S12 werden diese Daten dann an den CAN-Bus 4 übertragen. Von dort können sie von den fahrzeuginternen Einrichtungen 5, 6, 7 abgerufen werden. Dieses Abrufen der Daten wird durch die Arbitrierung unterstützt. Außerdem wird eine Priorisierung relativ zu anderen Daten vorgenommen, welche über den CAN-Bus 4 übertragen werden. Statt die Daten an den CAN-Bus 4 zu übertragen, können die Daten im Schritt S13 auch für eine akustische Ausgabe über den Lautsprecher 3 aufbereitet werden.

Die Datenkommunikation zwischen dem mobilen Gerät 8 und der Datenkommunikationsvorrichtung 2 kann für vielfältige Anwendungen genutzt werden. Beispielsweise kann die Audioausgabe über den Lautsprecher 19 des mobilen Geräts 8 und/oder über den fahrzeuginternen Lautsprecher 3 gesteuert werden. Handelt es sich bei dem mobilen Gerät um ein mobiles Navigationsgerät, kann die Audioausgabe des Navigationsgeräts nicht nur über den Lautsprecher 19 erfolgen, sondern auch über den Lautsprecher 3 erfolgen, welcher von der Datenkommunikationsvorrichtung 2 angesteuert wird, welche in das Rundfunkgerät integriert ist. Dabei kann die Datenkommunikationsvorrichtung 2 die Audioausgabe von Audiodaten, welche beispielsweise von einem fahrzeuginternen Musikspiefer ausgegeben werden, unterbrechen, um Audioausgaben des mobilen Navigationsgeräts 8 auszugeben. In einer Anzeigevorrichtung des Rundfunkempfängers kann außerdem visualisiert werden, welche Audioausgaben aktuell aktiv sind.

Des Weiteren kann die Datenkommunikation zwischen der Datenkommunikationsvorrichtung 2 und dem mobilen Gerät 8 für eine Anzeige eines Parkassistenten verwendet werden. Die Daten des von einer fahrzeuginternen Einrichtung 5, 6, 7 gebildeten Parkassistenten werden über den CAN-Bus 4 in dem ersten Datenprotokoll an die Datenkommunikationsvorrichtung 2 übertragen.

Dort werden die Daten gefiltert und konvertiert und an das mobile Gerät 8 übertragen, bei dem die Bilddaten auf der Anzeigefläche 13 ausgegeben werden.

Durch den Datenaustausch zwischen dem Datenkommunikationsgerät 2 und dem mobilen Gerät 8 können außerdem Bediendaten ausgetauscht werden, die es ermöglichen, dass der Rundfunkempfänger, welcher die Datenkommunikationsvorrichtung 2 enthält, und/oder andere fahrzeuginterne Einrichtungen 5, 6, 7 mittels des mobilen Geräts 8 bedient werden. Hierfür weist das mobile Gerät 8 eine Eingabevorrichtung auf. Beispielsweise kann die Anzeigefläche 13 als Touchscreen ausgebildet sein.

Umgekehrt kann durch die Datenkommunikation zwischen der Datenkommunikationsvorrichtung 2 und dem mobilen Gerät 8 auch das mobile Gerät 8 über die Bedienelemente des Fahrzeugs 1 bedient werden. Die Bediensignale können von entsprechenden Bedienelementen über den CAN-Bus 4 an die Datenkommunikationsvorrichtung 2 übertragen werden, dort in Bediensignale für die asynchrone serielle Schnittstelle 14 des mobilen Geräts umgesetzt werden, sodass nach der Übertragung an das mobile Gerät 8 diese Bediensignale von dem mobilen Gerät 8 weiterverarbeitet werden können.

Im Folgenden wird eine Alternative zu dem soeben mit Bezug zu Fig. 4 beschriebenen Verfahrens erläutert:

In diesem Fall setzt der Konverter 17 das erste Datenprotokoll des CAN-Buses 4 nicht unmittelbar in das zweite Datenprotokoll für die asynchrone serielle Schnittstelle um. Stattdessen erfolgt z. B. zwischen den Schritten S8 und S9 Seine Umsetzung in ein Zwischendatenformat. Die endgültige Umsetzung in das zweite Datenformat erfolgt erst innerhalb der Schnittstelle 14 des mobilen Geräts 8. Das Zwischendatenformat, welches über die Schnittstelle 18 der Datenkommunikationsvorrichtung 2 ausgegeben wird, zeichnet sich dadurch aus, dass keine Arbitrierung erfolgt. Das Zwischendatenformat entspricht jedoch insofern dem ersten Datenprotokoll, als dass Entwicklungswerkzeuge zur Simulation und Fehlersuche von Daten, die über den CAN-Bus 4 übertragen werden, mit sehr geringen Anpassungen weiterhin verwendet werden können.

### Bezugszeichenliste

- 1: Fahrzeug
- 2: Datenkommunikationsvorrichtung
- 3: Lautsprecher
- 4: CAN-Bus
- 5: fahrzeuginterne Einrichtung
- 6: fahrzeuginterne Einrichtung
- 7: fahrzeuginterne Einrichtung
- 8: mobiles Gerät
- 9: Kabel
- 10: Befestigungsvorrichtung
- 11: Windschutzscheibe
- 12: weiteres mobiles Gerät
- 13: Anzeigefläche
- 14: Schnittstelle
- 15: Schnittstelle
- 16: Filtereinrichtung
- 17: Konverter
- 18: Schnittstelle
- 19: Lautsprecher
- 20: Speicher
- 21: Sperreinrichtung

## Patentansprüche

1. Verfahren zur Datenkommunikation in einem Fahrzeug (1) zwischen einer fahrzeuginternen Datenkommunikationsvorrichtung (2) und einem mobilen Gerät (8), bei dem
- das mobile Gerät (8) in einem gesperrten Zustand mit dem Fahrzeug (1) gekoppelt wird,
- mittels der fahrzeuginternen Datenkommunikationsvorrichtung (2) ein in einem Speicher (20) des Fahrzeugs (1) unveränderbar gespeicherter Fahrzeugidentifikationscode an das mobile Gerät (8) übertragen wird,
- in dem mobilen Gerät (8) der übertragene Fahrzeugidentifikationscode mit einem in dem mobilen Gerät (8) durch einen persönlichen Identifikationscode gesichert gespeicherten Entsperrcode verglichen wird, wobei bei einer ersten Inbetriebnahme des mobilen Geräts (8) nach der Kopplung mit dem Fahrzeug (1) ein Nutzer aufgefordert wird, den persönlichen Identifikationscode einzugeben, wobei der persönliche Identifikationscode so gespeichert wird, dass er nicht mehr veränderbar ist, und,
- falls die verglichenen Codes übereinstimmen, das mobile Gerät (8) entsperrt wird.

2. Verfahren nach Anspruch 1,
**dadurch gekennzeichnet,**
**dass**, falls die verglichenen Codes nicht übereinstimmen, eine Aufforderung zur Eingabe des persönlichen Identifikationscodes ausgegeben wird.

3. Verfahren nach einem der vorstehenden Ansprüche,
**dadurch gekennzeichnet,**
**dass** die Datenverbindung zwischen der Datenkommunikationsvorrichtung (2) und dem
mobilen Gerät (8) eine serielle Punkt-zu-Punkt Verbindung ist.

4. System zum Betreiben eines mobilen Geräts (8) in einem Fahrzeug (1), wobei
- das Fahrzeug (1) eine fahrzeuginterne Datenkommunikationsvorrichtung (2) zur Datenkommunikation mit dem mobilen Gerät (8) und einen Speicher (20) aufweist, in dem ein Fahrzeugidentifikationscode unveränderbar gespeichert ist und
- das mobile Gerät (8) eine Sperreinrichtung (21) umfasst, in der ein Entsperrcode durch einen persönlichen Identifikationscode gesichert gespeichert ist, wobei bei einer ersten Inbetriebnahme des mobilen Geräts (8) nach der Kopplung mit dem Fahrzeug (1) der Nutzer dazu aufforderbar ist, den persönlichen Identifikationscode einzugeben, wobei der persönliche Identifikationscode so speicherbar ist, dass er nicht mehr veränderbar ist,
- mittels der fahrzeuginternen Datenkommunikationsvorrichtung (2) der in dem Speicher (20) des Fahrzeugs (1) gespeicherte Fahrzeugidentifikationscode an das mobile Gerät (8) übertragbar ist und
- in der Sperreinrichtung (21) des mobilen Geräts (8) der übertragene Fahrzeugidentifikationscode mit dem in der Entsperreinrichtung gespeicherten Entsperrcode vergleichbar ist, und, falls die verglichenen Codes übereinstimmen, das mobile Gerät entsperrbar ist.

5. System nach Anspruch 4,
**dadurch gekennzeichnet,**
**dass** das mobile Gerät (8) eine mobile Navigationsvorrichtung ist.

6. System nach Anspruch 4 oder 5,
**dadurch gekennzeichnet,**
**dass** die Datenkommunikationsvorrichtung (2) in einem Rundfunkgerät integriert ist.

7. Mobiles Gerät (8) zur Verwendung in einem Fahrzeug (1), wobei
- das Fahrzeug (1) eine fahrzeuginterne Datenkommunikationsvorrichtung (2) zur Datenkommunikation mit dem mobilen Gerät (8) und einen Speicher (20) aufweist, in dem ein Fahrzeugidentifikationscode unveränderbar gespeichert ist und
- das mobile Gerät (8) eine Sperreinrichtung (21) umfasst, in der ein Entsperrcode durch einen persönlichen Identifikationscode gesichert gespeichert ist, wobei bei einer ersten Inbetriebnahme des mobilen Geräts (8) nach der Kopplung mit dem Fahrzeug (1) der Nutzer dazu aufforderbar ist, den persönlichen Identifikationscode einzugeben, wobei der persönliche Identifikationscode so speicherbar ist, dass er nicht mehr veränderbar ist,
- mittels der fahrzeuginternen Datenkommunikationsvorrichtung (2) der in dem Speicher (20) des Fahrzeugs (1) gespeicherte Fahrzeugidentifikationscode an das mobile Gerät (8) übertragbar ist und
- in der Sperreinrichtung (21) des mobilen Geräts (8) der übertragene Fahrzeugidentifikationscode mit dem in der Entsperreinrichtung gespeicherten Entsperrcode vergleichbar ist, und, falls die verglichenen Codes übereinstimmen, das mobile Gerät entsperrbar ist.

8. Mobiles Gerät (8) nach Anspruch 7
**dadurch gekennzeichnet,**
**dass** die Datenverbindung zwischen der Datenkommunikationsvorrichtung (2) und dem mobilen Gerät (8) eine serielle Punkt-zu-Punkt Verbindung ist.

## Claims

1. Method for communicating data in a vehicle (1) between a data communication apparatus (2) inside the vehicle and a mobile device (8), in which
- the mobile device (8) is coupled to the vehicle (1) in a locked state,
- a vehicle identification code unalterably stored in a memory (20) of the vehicle (1) is transmitted to the mobile device (8) by means of the data communication apparatus (2) inside the vehicle,
- in the mobile device (8), the transmitted vehicle identification code is compared with an unlock code securely stored in the mobile device (8) by means of a personal identification code, in which case, when the mobile device (8) is first started up, after being coupled to the vehicle (1), a user is requested to input the personal identification code, the personal identification code being stored in such a manner that it is no longer alterable, and
- if the compared codes match, the mobile device (8) is unlocked.

2. Method according to Claim 1,
**characterized in that**
if the compared codes do not match, a request to input the personal identification code is output.

3. Method according to one of the preceding claims,
**characterized in that**
the data connection between the data communication apparatus (2) and the mobile device (8) is a serial point-to-point connection.

4. System for operating a mobile device (8) in a vehicle (1),
- the vehicle (1) having a data communication apparatus (2) inside the vehicle for data communication with the mobile device (8) and a memory (20) which unalterably stores a vehicle identification code, and
- the mobile device (8) comprising a locking device (21) which securely stores an unlock code by means of a personal identification code, in which case, when the mobile device (8) is first started up, after being coupled to the vehicle (1), the user can be requested to input the personal identification code, the personal identification code being able to be stored in such a manner that it is no longer alterable,
- the vehicle identification code stored in the memory (20) of the vehicle (1) being able to be transmitted to the mobile device (8) by means of the data communication apparatus (2) inside the vehicle, and
- in the locking device (21) of the mobile device (8), the transmitted vehicle identification code being able to be compared with the unlock code stored in the unlocking device, and the mobile device being able to be unlocked if the compared codes match.

5. System according to Claim 4,
**characterized in that**
the mobile device (8) is a mobile navigation apparatus.

6. System according to Claim 4 or 5,
**characterized in that**
the data communication apparatus (2) is integrated in a radio.

7. Mobile device (8) for use in a vehicle (1),
- the vehicle (1) having a data communication apparatus (2) inside the vehicle for data communication with the mobile device (8) and a memory (20) which unalterably stores a vehicle identification code, and
- the mobile device (8) comprising a locking device (21) which securely stores an unlock code by means of a personal identification code, in which case, when the mobile device (8) is first started up, after being coupled to the vehicle (1), the user can be requested to input the personal identification code, the personal identification code being able to be stored in such a manner that it is no longer alterable,
- the vehicle identification code stored in the memory (20) of the vehicle (1) being able to be transmitted to the mobile device (8) by means of the data communication apparatus (2) inside the vehicle, and
- in the locking device (21) of the mobile device (8), the transmitted vehicle identification code being able to be compared with the unlock code stored in the unlocking device, and the mobile device being able to be unlocked if the compared codes match.

8. Mobile device (8) according to Claim 7,
**characterized in that**
the data connection between the data communication apparatus (2) and the mobile device (8) is a serial point-to-point connection.

## Revendications

1. Procédé de communication de données dans un véhicule (1) entre un dispositif de communication de données (2) interne au véhicule et un appareil mobile (8), avec lequel
- l'appareil mobile (8) dans un état bloqué est couplé avec le véhicule (1),
- un code d'identification de véhicule, mémorisé de manière non modifiable dans une mémoire (20) du véhicule (1), est transmis à l'appareil mobile (8) au moyen du dispositif de communication de données (2),
- dans l'appareil mobile (8), le code d'identification de véhicule transmis est comparé avec un code de déblocage mémorisé dans l'appareil mobile (8) de manière sécurisée par un code d'identification personnel, un utilisateur étant invité à saisir le code d'identification personnel lors d'une première mise en service de l'appareil mobile (8) après le couplage avec le véhicule (1), le code d'identification personnel étant mémorisé de telle sorte qu'il ne peut plus être modifié, et
- appareil mobile (8) est débloqué dans le cas où les codes comparés coïncident.

2. Procédé selon la revendication 1, **caractérisé en ce que** dans le cas où les codes comparés ne coïncident pas, une invitation à saisir le code d'identification personnel est émise.

3. Procédé selon l'une des revendications précédentes, **caractérisé en ce que** la liaison de données entre le dispositif de communication de données (2) et l'appareil mobile (8) est une liaison point à point série.

4. Système pour faire fonctionner un appareil mobile (8) dans un véhicule (1),
- le véhicule (1) possédant un dispositif de communication de données (2) interne au véhicule destiné à la communication de données avec l'appareil mobile (8) et une mémoire (20) dans laquelle est mémorisé de manière non modifiable un code d'identification de véhicule et
- l'appareil mobile (8) comprenant un dispositif de blocage (21) dans lequel un code de déblocage est mémorisé de manière sécurisée par un code d'identification personnel, l'utilisateur pouvant être invité à saisir le code d'identification personnel lors d'une première mise en service de l'appareil mobile (8) après le couplage avec le véhicule (1), le code d'identification personnel pouvant être mémorisé de telle sorte qu'il ne peut plus être modifié,
- le code d'identification de véhicule mémorisé dans la mémoire (20) du véhicule (1) pouvant être transmis à l'appareil mobile (8) au moyen du dispositif de communication de données (2) interne au véhicule, et
- le code d'identification de véhicule transmis pouvant être comparé dans le dispositif de blocage (21) de l'appareil mobile (8) avec le code de déblocage mémorisé dans le dispositif de déblocage et l'appareil mobile (8) pouvant être débloqué dans le cas où les codes comparés coïncident.

5. Système selon la revendication 4, **caractérisé en ce que** l'appareil mobile (8) est un dispositif de navigation mobile.

6. Système selon la revendication 4 ou 5, **caractérisé en ce que** le dispositif de communication de données (2) est intégré dans un appareil de radiocommunication.

7. Appareil mobile (8) destiné à être utilisé dans un véhicule (1),
- le véhicule (1) possédant un dispositif de communication de données (2) interne au véhicule destiné à la communication de données avec l'appareil mobile (8) et une mémoire (20) dans laquelle est mémorisé de manière non modifiable un code d'identification de véhicule et
- l'appareil mobile (8) comprenant un dispositif de blocage (21) dans lequel un code de déblocage est mémorisé de manière sécurisée par un code d'identification personnel, l'utilisateur pouvant être invité à saisir le code d'identification personnel lors d'une première mise en service de l'appareil mobile (8) après le couplage avec le véhicule (1), le code d'identification personnel pouvant être mémorisé de telle sorte qu'il ne peut plus être modifié,
- le code d'identification de véhicule mémorisé dans la mémoire (20) du véhicule (1) pouvant être transmis à l'appareil mobile (8) au moyen du dispositif de communication de données (2) interne au véhicule, et
- le code d'identification de véhicule transmis pouvant être comparé dans le dispositif de blocage (21) de l'appareil mobile (8) avec le code de déblocage mémorisé dans le dispositif de déblocage et l'appareil mobile pouvant être débloqué dans le cas où les codes comparés coïncident.

8. Appareil mobile (8) selon la revendication 7, **caractérisé en ce que** la liaison de données entre le dispositif de communication de données (2) et l'appareil mobile (8) est une liaison point à point série.
